# FASCICULE DE BREVET EUROPEEN

(11) **EP 4 108 324 B1**
(45) Date de publication et mention de la délivrance du brevet: **12.06.2024**
(21) Numéro de dépôt: 22179926.5
(22) Date de dépôt: 20.06.2022
(51) Int. Cl.: B01F 27/61, B01F 27/88, B65D 1/02, B65D 25/40, B65D 77/04, G01N 1/10, G01N 33/18

(54) **BIDON DE COLLECTE POUR DISPOSITIF PRÉLEVEUR D'ÉCHANTILLONS IN-SITU D'UN EFFLUENT LIQUIDE**
SAMMELBEHÄLTER FÜR EINE VORRICHTUNG ZUR ENTNAHME VON IN-SITU-PROBEN AUS EINER FLÜSSIGEN ABLEITUNG
COLLECTION CONTAINER FOR IN-SITU SAMPLE COLLECTION DEVICE FOR A LIQUID EFFLUENT

(30) Priorité: 23.06.2021 FR 2106669
(43) Date de publication de la demande: 28.12.2022
(73) Titulaire: JEDEAU, 84120 Pertuis (FR)
(72) Inventeur: JULLIEN, Régis, 84120 Pertuis (FR); JULLIEN, Bernard, 83150 Bandol (FR)
(74) Mandataire: Med'inVent Consulting

(56) Documents cités:
- EP-A1- 0 633 200
- WO-A1-2015/001042
- DE-U1- 9 216 123
- FR-A- 1 568 019
- FR-A1- 3 069 175
- JP-A- 2008 162 634
- US-A1- 2005 087 531
- US-A1- 2008 156 827
- US-A1- 2019 209 986

## Description

### [Domaine technique]

La présente invention concerne d'une manière générale les dispositifs préleveurs d'échantillons in-situ d'un effluent liquide destinés à permettre leur mise en analyse en laboratoire afin de déterminer la teneur en certains polluants de cet effluent. L'invention vise en particulier un bidon de prélèvement pour un tel dispositif préleveur.

### [Technique antérieure]

Les industries et les zones urbaines rejettent des effluents (eaux résiduaires usées) dont les caractéristiques en termes de débits et de concentrations en polluants sont très variables au cours du temps.

Les normes actuelles en matière de préservation de l'environnement, plus particulièrement anti-pollution, imposent aujourd'hui de procéder à des analyses rigoureuses de tels effluents selon différents critères ou paramètres physico-chimiques imposés par la législation, tels qu'à titre d'exemples non limitatifs, l'analyse de nitrate-nitrite et de phosphate, l'analyse d'ammonium, l'analyse du silicate, l'analyse de la demande chimique en oxygène (également connue sous l'abréviation DCO), l'analyse de la demande biochimique en oxygène (également connue sous l'abréviation DBO), la détermination de la concentration en matières en suspension, etc....

Pour connaître les flux polluants émis durant une période, par exemple de vingt-quatre heures, on effectue des prélèvements d'échantillons élémentaires de ces effluents, généralement à l'aide de dispositifs préleveurs automatiques réfrigérés et isothermes.

Un tel dispositif préleveur est classiquement composé d'un tuyau d'aspiration plongeant dans l'effluent à prélever, ainsi que d'une enceinte contenant une pompe à dépression ou péristaltique, un module de commande et d'au moins un bidon de collecte.

Ces échantillons élémentaires, prélevés en fonction du temps, du débit ou du volume écoulé, sont regroupés de manière appropriée pour constituer un échantillon moyen représentatif contenu dans le au moins dit bidon de collecte.

Plusieurs fractions de cet échantillon moyen représentatif sont ensuite transvasées de ce bidon de collecte vers des flacons d'analyse destinés à être transmis à des laboratoires accrédités chargés de déterminer les concentrations de certains polluants recherchés.

Un tel bidon de collecte, décrit par exemple dans la demande de brevet française FR 3 069 175 A1 déposée par le demandeur, comporte classiquement un réservoir de forme globalement parallélépipédique rectangle et délimité par une paroi supérieure présentant une ouverture permettant de collecter l'effluent prélevé, une paroi inférieure, une paroi avant, une paroi arrière et deux parois latérales.

Ce bidon de collecte comporte également un robinet d'écoulement raccordé fluidiquement au réservoir via un orifice ménagé en partie basse de la paroi avant de ce réservoir et permettant à un opérateur de réaliser aisément, de manière sécurisée et sans risque de souiller l'échantillon moyen représentatif contenu dans ce réservoir, les opérations de transvasement de fractions de cet échantillon vers les différents flacons d'analyse.

Après la réalisation de ces opérations de transvasement durant lesquelles la totalité du volume utile (i.e. celui situé au-dessus de l'orifice de raccordement de la vanne) du réservoir est soutirée, le bidon doit être retourné pour assurer sa vidange complète avant sa remise en place dans le dispositif préleveur afin qu'il puisse recueillir un nouvel échantillon moyen représentatif.

Malheureusement, il s'avère à l'usage que certains opérateurs oublient malencontreusement de vidanger complètement le bidon avant sa remise en place dans le dispositif préleveur, de sorte que ce résidu liquide contenu au fond de ce bidon va se mélanger avec le nouvel échantillon moyen représentatif prélevé ultérieurement et fausser de ce fait les résultats des analyses réalisées par la suite sur ce dernier échantillon.

EP633200A1 divulgue un bidon selon l'état de la technique.

### [Exposé de l'invention]

La présente invention vise donc à améliorer la situation.

Elle propose à cet effet un bidon de collecte pour dispositif préleveur d'échantillons in-situ d'un effluent liquide, comportant un réservoir de forme globalement parallélépipédique rectangle délimité par une paroi supérieure présentant une ouverture permettant de collecter l'effluent prélevé, une paroi inférieure de fond, une paroi avant, une paroi arrière et deux parois latérales. Le bidon comprend également un robinet d'écoulement raccordé fluidiquement à un orifice ménagé en partie basse de ladite paroi avant du réservoir. Selon l'invention, ladite paroi inférieure de fond présente une portion inclinée longitudinalement suivant une pente présentant un angle d'inclinaison prédéterminé. Les parois latérales comportent en partie basse des inserts métalliques. Le bidon comporte un socle de maintien fixé à la partie basse dudit réservoir et permettant audit bidon de se tenir à la verticale lorsqu'il est posé sur un support horizontal, ledit socle de maintien comprenant une semelle rectangulaire qui s'étend horizontalement sous ladite paroi inférieure de fond du réservoir, ainsi que deux bords tombés latéraux bordant ladite semelle en s'étendant verticalement au-dessus de cette dernière et étant fixés aux inserts métalliques des parois latérales du réservoir

La présence d'une telle portion inclinée longitudinalement sur la paroi inférieure de fond du réservoir de ce bidon permet de réduire le volume résiduel de l'échantillon moyen représentatif d'effluent liquide non soutirable via le robinet d'écoulement car situé en dessous du niveau de l'orifice de raccordement de ce robinet.

Ainsi, lorsque l'opérateur oublie de retourner le bidon pour le vidanger complètement après les opérations de transvasement de fractions de cet échantillon moyen représentatif vers différents flacons d'analyse et avant sa remise en place dans un dispositif préleveur, cette réduction du volume résiduel contenu dans le réservoir du bidon selon l'invention permet de limiter les effets de ce volume résiduel sur le nouvel échantillon moyen représentatif prélevé ultérieurement et collecté dans ce même bidon.

De plus, l'ajout d'un socle venant se fixer à des inserts placés dans les parois latérales permet de réaliser le bidon à moindre coût. La semelle du socle permet d'assurer une excellente stabilité du bidon. Par ailleurs, l'espace libéré entre la semelle et la paroi inférieure, sous cette portion inclinée longitudinalement peut être utilisé pour y loger certains modules ou accessoires complémentaires.

Selon une caractéristique de réalisation préférée permettant notamment une utilisation plus aisée de l'espace libérée sans interférence avec le robinet d'écoulement, ladite portion inclinée longitudinalement s'étend avantageusement de manière descendante depuis ladite paroi arrière du réservoir sur au moins la majeure partie de sa longueur.

Afin de réduire encore le volume résiduel du bidon, ladite portion inclinée longitudinalement peut par exemple s'étendre sur l'ensemble de la longueur dudit réservoir entre ses parois arrière et avant.

A contrario et de manière à éviter que l'angle interne de l'arête de jonction entre les parois avant et inférieure du réservoir soit aigu et que des particules de l'effluent y stagnent, ladite portion inclinée longitudinalement peut s'étendre jusqu'à une portion avant horizontale rejoignant ladite paroi avant du réservoir.

Toujours dans un but d'optimiser le volume résiduel du bidon sans perdre de volume utile, ledit angle d'inclinaison prédéterminé peut par exemple être compris entre 5 et 10° et/ou l'extrémité supérieure de cette portion inclinée longitudinalement peut être agencée sensiblement au même niveau en hauteur que l'extrémité inférieure dudit orifice de raccordement du robinet.

Avec encore le même objectif de réduire le volume résiduel ainsi que celui d'améliorer l'homogénéisation de l'échantillon moyen représentatif contenu dans le réservoir, ladite paroi inférieure de fond peut présenter, en section transversale, un profil incurvé dont la concavité est tournée vers l'intérieur dudit réservoir. Ce profil incurvé est avantageusement agencé de manière symétrique vis-à-vis du plan longitudinal vertical médian dudit réservoir.

Afin d'optimiser la contenance du bidon au vu de la configuration des logements d'accueil dédiés dans les dispositifs préleveurs, le robinet d'écoulement est par exemple logé entièrement dans un renfoncement ménagé dans la partie basse de la paroi avant du réservoir et s'étendant jusqu'à son extrémité inférieure.

Pour des raisons de coût et de simplicité de fabrication, ledit socle de maintien est par exemple réalisé à partir d'une feuille de tôle métallique découpée et pliée. Afin de réduire le poids de la semelle, celle-ci peut être percée de trous ou partiellement évidée.

Toujours pour des raisons de coût et de simplicité de fabrication, ledit réservoir est avantageusement venu de moulage à partir d'un polymère thermoplastique, de préférence par un procédé roto-moulage qui présente l'avantage de ne nécessiter qu'un faible investissement pour la fabrication des moules.

Afin d'assurer une homogénéisation de l'échantillon moyen représentatif d'effluent liquide contenu dans le réservoir, le bidon selon l'invention est avantageusement doté d'un organe agitateur comprenant une tige logée à l'intérieur dudit réservoir et portant fixement à son extrémité inférieure une tête d'agitation apte à générer un brassage du liquide collecté.

De manière à assurer notamment un meilleur brassage de l'échantillon moyen représentatif d'effluent contenu dans le réservoir, l'axe de ladite tige est avantageusement incliné selon un second angle d'inclinaison prédéterminé vis-à-vis de la verticale, compris préférentiellement entre 5 et 30°.

Toujours afin d'assurer un meilleur brassage de l'échantillon moyen représentatif d'effluent contenu dans le réservoir, l'axe de cette tige est avantageusement situé dans le plan longitudinal vertical médian dudit réservoir.

Afin d'optimiser notamment la contenance du bidon au vu de la configuration des logements d'accueil dédiés dans les dispositifs préleveurs, ledit organe agitateur comprend également un moyeu logé fixement à l'intérieur dudit réservoir sous sa paroi supérieure et recevant à libre rotation autour de son axe la portion supérieure de ladite tige, ainsi qu'un élément d'accouplement porté fixement par l'extrémité supérieure de ladite tige et saillant à l'extérieur dudit réservoir au travers d'une découpe ménagée dans sa paroi supérieure, cet élément d'accouplement étant doté sur sa face supérieure d'un relief d'accouplement prévu pour coopérer par correspondance de forme avec celui d'un autre élément d'accouplement porté par un arbre rotatif motorisé de sorte à assurer la mise en rotation de ladite tête d'agitation.

La fixation dudit moyeu audit réservoir est assurée, par exemple, par l'intermédiaire d'une platine surmontant ledit moyeu auquel elle est fixée, cette platine recouvrant en outre ladite découpe et étant fixée audit réservoir.

De manière à faciliter la vidange dudit réservoir par simple retournement du bidon, la paroi supérieure de ce réservoir présente avantageusement une conformation pyramidale formée par quatre pans inclinés s'étendant entre le bord périphérique de ladite ouverture constituant le sommet de ce réservoir et les bords supérieurs des dites parois avant, arrière et latérales.

Enfin et de sorte à éviter que des particules de l'échantillon moyen représentatif de l'effluent ne stagnent au niveau des arêtes et des coins du réservoir et d'assurer ainsi un meilleur brassage de cet échantillon, les coins et les arêtes du réservoir sont avantageusement arrondis.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
la figure 1 représente une vue en perspective d'un bidon de collecte selon l'invention pour dispositif préleveur d'échantillons in-situ d'un effluent liquide ;
la figure 2 est une vue en coupe du bidon de la figure 1, prise selon son plan longitudinal vertical médian ; et
la figure 3 représente une vue en coupe transversale du réservoir que comporte le bidon selon l'invention, prise selon le plan III-III de la figure 2 ; et
la figure 4 est une vue en perspective de l'élément d'accouplement de l'organe agitateur que comporte le bidon selon l'invention.

### [Description détaillée]

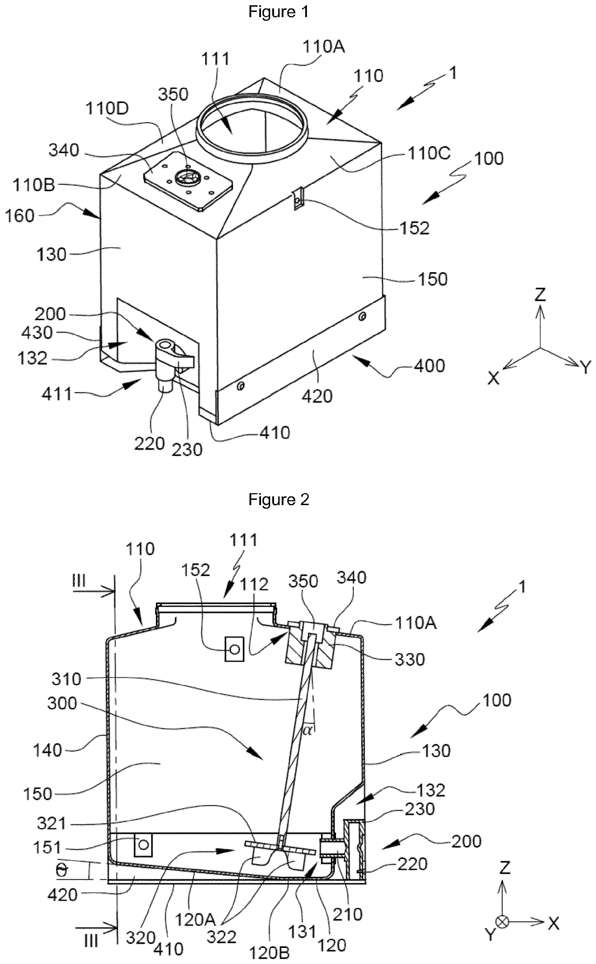

Les figures 1 et 2 illustrent un bidon de collecte selon l'invention 1, apte à être utilisé dans un dispositif préleveur d'échantillons in-situ d'un effluent liquide, non représenté, pour recueillir plusieurs échantillons élémentaires de cet effluent prélevés en fonction du temps, du débit ou du volume écoulé, de sorte à constituer un échantillon moyen représentatif dont plusieurs fractions seront ensuite transvasées de ce bidon 1 vers des flacons d'analyse destinés à être transmis à des laboratoires accrédités chargés de déterminer les concentrations de certains polluants recherchés.

On définit par rapport au bidon 1 un repère orthogonal XYZ comprenant trois axes perpendiculaires deux à deux, à savoir :
- un axe X, définissant une direction longitudinale, horizontale,
- un axe Y, définissant une direction transversale, horizontale, qui avec l'axe X définit un plan XY horizontal, et
- un axe Z, définissant une direction verticale, perpendiculaire au plan XY horizontal.

Dans la description qui va suivre et par convention, les termes « inférieur » et « supérieur » seront utilisés pour définir la position relative d'un élément par rapport à un autre selon la direction verticale, tandis que les termes « avant » et « arrière » seront utilisés pour définir la position relative d'un élément par rapport à un autre selon la direction longitudinale.

Le bidon de collecte 1 comporte un réservoir de forme globalement parallélépipédique rectangle 100 dont les dimensions sont adaptées à celles d'un logement d'accueil prévu sur les dispositifs préleveurs du commerce, délimité par une paroi supérieure 110 présentant une ouverture circulaire 111 permettant de collecter l'effluent prélevé, une paroi inférieure de fond 120, une paroi avant 130, une paroi arrière 140, et deux parois latérales 150, 160.

Le réservoir 100 est de préférence venu de moulage à partir d'un polymère thermoplastique tel que le polyéthylène haute densité (PEHD) ou le polychlorure de vinyle (PVC), éventuellement renforcé en fibres naturelles et/ou synthétiques.

Essentiellement pour des raisons de coût de fabrication du moule, le procédé de moulage utilisé pour la fabrication du réservoir 100 sera de préférence le roto-moulage, mais d'autres procédés peuvent être également envisagés tel que notamment le moulage par extrusion soufflage.

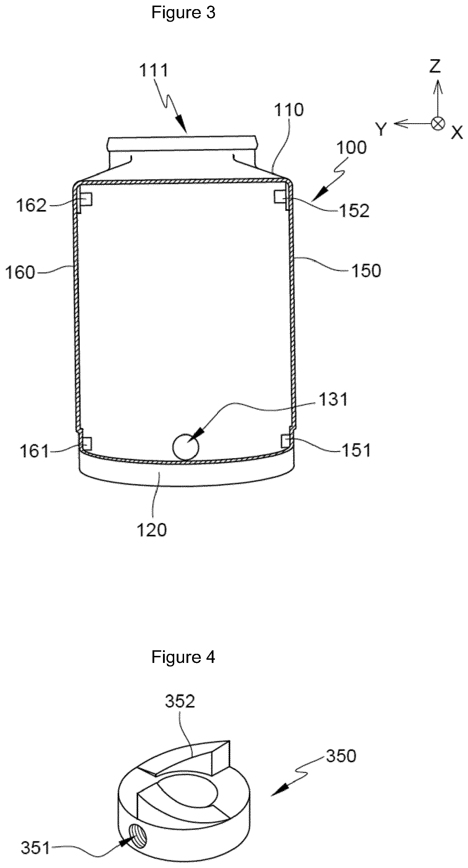

Le bidon de collecte 1 comporte également un robinet d'écoulement 200 raccordé fluidiquement à un orifice circulaire 131 ménagé en partie basse de la paroi avant 130 du réservoir 100 (voir figures 2 et 3) en étant avantageusement centré vis-à-vis du plan longitudinal vertical médian de ce dernier.

Réalisé par exemple en matière plastique, le robinet d'écoulement 200 comporte :
- une embase creuse de raccordement 210 fixée par vissage sur un taraudage ménagé sur la face interne de l'orifice 131 ;
- un bec de soutirage 220 orienté verticalement vers le bas et relié fluidiquement par un circuit interne de distribution à ladite embase 210 (et donc à l'intérieur du réservoir 100) ;
- des moyens de contrôle du débit de fluide (non visibles sur les figures) agissant sur le circuit interne de distribution pour autoriser ou pour empêcher la circulation du liquide entre l'embase de raccordement 210 et le bec de soutirage 220 ; et
- un levier de commande 230 apte à interagir avec lesdits moyens de contrôle et étant actionnable manuellement par un opérateur entre une position de repos dans laquelle lesdits moyens de contrôle bloquent totalement la circulation de liquide jusqu'au bec de soutirage 220, et une position d'écoulement dans laquelle lesdits moyens de contrôle permettent la circulation de liquide jusqu'audit bec de soutirage 220.

De manière avantageuse et afin de répondre à certaines contraintes normatives, le circuit interne de distribution du robinet présente un passage d'au moins 9 millimètres de diamètre.

Selon des variantes de réalisation non représentées, le robinet peut être réalisé dans matériau métallique ou en alliage métallique tel que le laiton ou l'acier inoxydable.

Le bidon de collecte 1 peut également comporter de manière avantageuse un bouchon ou couvercle, non représenté sur les figures, apte à être rapporté fixement et de manière amovible (par exemple par vissage ou par clipsage) sur l'ouverture 111 pour l'obturer et de sorte à permettre de déplacer ce bidon hors du dispositif préleveur sans risque que des particules présentes dans l'air environnant (poussières, pollens, et...) ne puissent y pénétrer et souiller l'échantillon moyen représentatif.

La paroi supérieure 110 présente avantageusement une conformation pyramidale formée par quatre pans inclinés 110A, 110B, 110C, 110D s'étendant entre le bord périphérique de l'ouverture 111 constituant le sommet du réservoir 100 et les bords supérieurs des parois avant 130, arrière 140 et latérales 150, 160.

Une telle conformation pyramidale de cette paroi supérieure 110 permet à un opérateur, après les opérations de transvasement de fractions de l'échantillon moyen représentatif vers des flacons d'analyse, d'effectuer par un simple retournement du bidon 1 une vidange complète par gravité du reste de liquide y demeurant.

Afin d'optimiser la contenance du bidon 1 au vu de la configuration des logements d'accueil dédiés dans les dispositifs préleveurs, le robinet d'écoulement 200 est avantageusement logé entièrement dans un renfoncement 132 ménagé dans la partie basse de la paroi avant 130 du réservoir 100 et s'étendant jusqu'à son extrémité inférieure.

On remarquera que ce renfoncement 132 est délimité latéralement et en partie supérieure par des pans présentant un angle de dépouille positif de sorte à faciliter les opérations de démoulage du réservoir 100 ainsi que la manipulation du levier de commande 230 du robinet 200.

Tel qu'illustré sur la figure 2, le bidon de collecte 1 comporte également un organe agitateur 300, désigné également de manière courante sous l'appellation « impulseur », et apte à générer un brassage de l'échantillon moyen représentatif permettant d'assurer son homogénéisation avant et pendant chaque opération de transvasement d'une fraction de cet échantillon vers un flacon d'analyse.

L'organe agitateur 300 comporte une tige cylindrique 310, logée à l'intérieur du réservoir 100 et dont l'axe est avantageusement situé dans le plan longitudinal vertical médian de ce dernier, cette tige 310 portant fixement à son extrémité inférieure une tête d'agitation 320 agencée en dessous du niveau de l'orifice de raccordement 131 du robinet 200 à proximité du coin inférieur avant de ce réservoir 100.

La tête d'agitation 320 comprend un disque support 321 s'étendant suivant un plan perpendiculaire à l'axe de la tige 310 et fixé en son centre (par exemple, par vissage) contre l'extrémité inférieure de cette tige 310.

Cette tête d'agitation 320 comprend également quatre ailettes de brassage 322 saillant depuis la face inférieure du disque support 321 et s'étendant selon des directions radiales, en étant avantageusement écartées angulairement de manière régulière à 90° les unes des autres.

Selon des variantes de réalisation non représentées, la tête d'agitation de l'organe agitateur peut être agencée différemment et comporter par exemple un nombre différent d'ailettes de brassage conformées autrement.

De manière générale, le profil et l'agencement de ces ailettes de brassage sont définis de sorte à assurer un brassage efficace de l'échantillon moyen représentatif contenu dans le réservoir 100 tout en évitant la génération de tourbillons (ces derniers entraînant une oxygénation de cet échantillon impactant certaines de ses propriétés physico-chimiques et donc sur les résultats de certaines analyses comme par exemple la DCO et/ou la DBO).

L'organe agitateur 300 comporte également un moyeu 330 à l'intérieur duquel la portion supérieure de la tige 310 est montée à libre rotation autour de son axe par l'intermédiaire d'une ou plusieurs bagues de roulements à billes. Ce moyeu 330 est logé fixement à l'intérieur du réservoir 100 sous le pan incliné 110A de sa paroi supérieure 110 et traversant une découpe 112 de forme complémentaire ménagée dans ce pan incliné 110A.

La fixation du moyeu 330 au réservoir 100 est assurée par l'intermédiaire d'une platine rectangulaire 340 surmontant ce moyeu 330 auquel elle est fixée (par exemple, par vissage), cette platine 340 recouvrant en outre la découpe 112 et étant fixée au réservoir (par exemple, par vissage).

L'organe agitateur 300 comporte enfin un élément d'accouplement annulaire 350 porté fixement par l'extrémité supérieure de la tige 310, par exemple à l'aide d'une vis de serrage vissée dans un taraudage radial traversant 351 (voir figure 4) ménagé dans cet élément 350 et dont l'extrémité est serrée contre cette extrémité supérieure de la tige 310.

Saillant à l'extérieur du réservoir 100 au travers de la découpe 112 et d'un perçage de forme complémentaire ménagé dans la platine 340, cet élément d'accouplement 350 est doté sur sa face supérieure d'un relief d'accouplement 352 (voir figure 4) destiné à coopérer par correspondance de forme avec celui d'un autre élément d'accouplement porté par un arbre rotatif motorisé non représenté, de sorte à assurer la mise en rotation de la tête d'agitation 320.

Un tel arbre rotatif motorisé peut par exemple être logé dans un boîtier rapportable de manière amovible sur la platine 340, ce boîtier hébergeant également de manière avantageuse une batterie assurant l'alimentation électrique de l'arbre ainsi qu'un variateur permettant de régler sa vitesse de rotation.

On remarquera que l'axe de la tige 310 correspondant à l'axe de rotation de l'organe agitateur 300 est avantageusement incliné suivant un second angle d'inclinaison prédéterminé α vis-à-vis de la verticale, ce qui permet d'assurer un meilleur brassage de l'échantillon moyen représentatif et d'éviter que les particules en suspension contenues dans cet échantillon et aspirées axialement puis rejetées tangentiellement par la tête d'agitation 320 ne soient projetées vers l'embase de raccordement 210 du robinet 200 et ne soient déstructurées par cette dernière.

Cet angle d'inclinaison α est avantageusement compris entre 5 et 30° et de préférence entre 10 et 20°.

Tel qu'illustré par la figure 2, la paroi inférieure de fond 120 du réservoir 100 présente une portion inclinée longitudinalement 120A suivant une pente présentant un angle d'inclinaison prédéterminé θ par rapport à l'horizontale, avantageusement compris entre 5 et 10°.

Plus précisément, cette portion inclinée longitudinalement 120A s'étend de manière descendante depuis la paroi arrière 140 du réservoir 100 sur au moins la majeure partie de sa longueur et jusqu'à une portion avant horizontale 120B rejoignant la paroi avant 130 de ce réservoir 100.

La présence de cette portion inclinée longitudinalement 120A permet de réduire le volume résiduel de l'échantillon moyen représentatif non soutirable via le robinet d'écoulement 200 car situé en dessous du niveau de l'orifice de raccordement 131 de ce robinet.

Ainsi, lorsque l'opérateur oublie de retourner le bidon 1 pour le vidanger complètement après les opérations de transvasement de fractions de l'échantillon moyen représentatif vers différents flacons d'analyse et avant sa remise en place dans un dispositif préleveur, cette réduction du volume résiduel contenu dans le réservoir 100 permet de limiter les effets de ce volume résiduel sur le nouvel échantillon moyen représentatif prélevé ultérieurement et collecté dans ce bidon 1.

Toujours en référence à la figure 2 et afin d'optimiser encore ce volume résiduel, l'extrémité supérieure de cette portion inclinée longitudinalement 120A est agencée de préférence sensiblement au même niveau en hauteur que l'extrémité inférieure de l'orifice de raccordement 131 de robinet 200.

On notera également que cette portion inclinée longitudinalement 120A permet d'améliorer l'homogénéisation de cet échantillon moyen représentatif lors de son brassage par l'organe agitateur 300 en « ramenant » les particules en suspension proches du fond du réservoir 100 vers sa partie avant où se trouve l'organe agitateur 300.

Par ailleurs, l'espace libéré sous cette portion inclinée longitudinalement 120A peut être utilisé avantageusement pour y loger certains modules ou accessoires complémentaires, comme par exemple un module de télécommunication sans fil, non représenté, et permettant au bidon 1 de transmettre vers l'extérieur certaines données représentatives de l'échantillon moyen mesurées par des capteurs telles que par exemple sa température ou son volume.

Selon des variantes de réalisation non représentées, cette portion inclinée longitudinalement peut s'étendre sur l'ensemble de la longueur du réservoir 100 entre ses parois arrière 140 et avant 130.

Tel qu'illustré par la figure 3 montrant uniquement le réservoir 100, la paroi inférieure de fond 120 présente avantageusement, en section transversale, un profil incurvé en arc de cercle dont la concavité est tournée vers l'intérieur du réservoir 100 et étant agencé de manière symétrique vis-à-vis du plan longitudinal vertical médian de ce réservoir 100.

Un tel profil incurvé de la paroi inférieure de fond 120 permet également de réduire le volume résiduel de l'échantillon moyen représentatif non soutirable via le robinet d'écoulement 200, ainsi que d'améliorer l'homogénéisation de l'échantillon moyen représentatif contenu dans le réservoir 100 lors de son brassage par l'organe agitateur 300 en « ramenant » les particules en suspension proches des deux côtés latéraux de ce réservoir 100 vers sa partie centrale où se trouve cet organe agitateur 300.

Ce profil incurvé est configuré de préférence de sorte que la différence de hauteur entre son centre et ses extrémités latérales soit comprise entre 5 et 15 millimètres.

On remarquera également que le réservoir 100 présente avantageusement des coins et des arêtes arrondis de sorte à éviter que des particules de l'échantillon moyen représentatif y stagnent et afin d'assurer ainsi un meilleur brassage de cet échantillon.

Le bidon de collecte 1 comporte en outre un socle de maintien 400 fixé à la partie basse du réservoir 100 et permettant à ce bidon de se tenir à la verticale lorsqu'il est posé sur un support horizontal tel que celui d'un dispositif préleveur ou celui permettant de réaliser les opérations de transvasement de fractions de l'échantillon moyen représentatif vers des flacons d'analyse.

Réalisé de préférence à partir d'une feuille de tôle métallique (avantageusement en acier inoxydable) découpée et pliée, ce socle de maintien 400 comprend une semelle rectangulaire 410 s'étendant horizontalement sous la paroi inférieure de fond 120 du réservoir 100 et contre sa portion avant horizontale 120A, ainsi que deux bords tombés latéraux 420, 430 bordant la semelle 410 en s'étendant verticalement au-dessus de cette dernière et étant fixés sur les parois latérales 150, 160 du réservoir 100.

La fixation de chaque bord tombé latéral 420, 430 sur la paroi latérale correspondante 150, 160 du réservoir 100 est assurée avantageusement par l'intermédiaire d'au moins deux vis distantes longitudinalement l'une de l'autre dont les tiges, introduites préalablement au travers d'orifices respectifs ménagés dans ce bord tombé, sont vissées sur des inserts métalliques taraudés 151, 161 intégrés à cette paroi latérale 150, 160 et visibles notamment sur la figure 3 (ces inserts étant positionnés dans le moule avant injection de la matière plastique formant le réservoir 100).

La semelle rectangulaire 410, dont les dimensions en largeur et el longueur sont identiques à celles du réservoir 100, présente une échancrure 411 ménagée dans sa partie avant à l'aplomb du renfoncement 132 et dont le profil épouse celui en section horizontale de ce dernier. Pour alléger la semelle 410, il est possible de faire des trous, l'important étant que la semelle présente une surface qui puisse maintenir le bidon en position vertical y compris sur un sol ou un support qui n'est pas parfaitement plat.

Enfin, le bidon de collecte 1 peut comporter également une poignée de préhension en forme de U inversé, non représentée, montée articulée à pivotement sur le dessus du réservoir 100.

Pour ce faire, chacune des parois latérales 150, 160 intègre à son extrémité supérieure, un insert métallique taraudé respectif 152, 162 destiné à permettre le vissage à libre rotation des deux extrémités libres de la poignée sur ces parois 150, 160 (voir figure 3).

Le bidon selon l'invention peut également trouver application dans d'autres domaines que celui concernant le prélèvement d'échantillons in-situ d'un effluent liquide.

## Revendications

1. Bidon de collecte (1) d'un dispositif préleveur d'échantillons in-situ d'un effluent liquide, comportant un réservoir de forme globalement parallélépipédique rectangle (100) délimité par une paroi supérieure (110) présentant une ouverture (111) permettant de collecter l'effluent prélevé, une paroi inférieure de fond (120), une paroi avant(130), une paroi arrière (140) et deux parois latérales (150, 160), ledit bidon (1) comprenant également un robinet d'écoulement (200) raccordé fluidiquement à un orifice (131) ménagé en partie basse de ladite paroi avant (130) du réservoir (100) ; **caractérisé en ce que** ladite paroi inférieure de fond (120) présente une portion (120A) inclinée longitudinalement suivant une pente présentant un angle d'inclinaison prédéterminé (θ), **en ce que** les parois latérales (150, 160) comportent en partie basse des inserts métalliques (151, 161), et **en ce que** le bidon comporte un socle de maintien (400) fixé à la partie basse dudit réservoir (100) et permettant audit bidon (100) de se tenir à la verticale lorsqu'il est posé sur un support horizontal, ledit socle de maintien (400) comprenant une semelle rectangulaire (410) qui s'étend horizontalement sous ladite paroi inférieure de fond (120) du réservoir (100), ainsi que deux bords tombés latéraux (420, 430) bordant ladite semelle (410) en s'étendant verticalement au-dessus de cette dernière et étant fixés aux inserts métalliques (151, 161) des parois latérales (150, 160) du réservoir (100).

2. Bidon de collecte (1) selon la revendication 1, **caractérisé en ce que** ladite portion inclinée longitudinalement (120A) s'étend de manière descendante depuis ladite paroi arrière (140) du réservoir (100) sur au moins la majeure partie de sa longueur.

3. Bidon de collecte (1) selon la revendication 2, **caractérisé en ce que** ladite portion inclinée longitudinalement (120A) s'étend sur l'ensemble de la longueur dudit réservoir (100) entre ses parois arrière (140) et avant (130).

4. Bidon de collecte (1) selon la revendication 2, **caractérisé en ce que** ladite portion inclinée longitudinalement (120A) s'étend jusqu'à une portion avant horizontale (120B) rejoignant ladite paroi avant (130) du réservoir (100).

5. Bidon de collecte (1) selon l'une des revendications 1 à 4, **caractérisé en ce que** ledit angle d'inclinaison prédéterminé (θ) est compris entre 5 et 10°.

6. Bidon de collecte (1) selon l'une des revendications 1 à 5, **caractérisé en ce que** l'extrémité supérieure de cette portion inclinée longitudinalement (120A) est agencée sensiblement au même niveau en hauteur que l'extrémité inférieure dudit orifice de raccordement (131) du robinet (200).

7. Bidon de collecte (1) selon l'une des revendications 1 à 6, **caractérisé en ce que** ladite paroi inférieure de fond (120) présente, en section transversale, un profil incurvé dont la concavité est tournée vers l'intérieur dudit réservoir (100).

8. Bidon de collecte (1) selon l'une des revendications 1 à 7, **caractérisé en ce que** ledit robinet d'écoulement (200) est logé entièrement dans un renfoncement (132) ménagé dans la partie basse de la paroi avant (130) du réservoir (100) et s'étendant jusqu'à son extrémité inférieure.

9. Bidon de collecte (1) selon l'une des revendication 1 à 8, **caractérisé en ce que** ledit socle de maintien (400) est réalisé à partir d'une feuille de tôle métallique découpée et pliée.

10. Bidon de collecte (1) selon l'une des revendications 1 à 9, **caractérisé en ce que** ledit réservoir (100) est venu de moulage à partir d'un polymère thermoplastique.

11. Bidon de collecte (1) selon la revendication 10, **caractérisé en ce que** ledit réservoir (100) est obtenu par roto-moulage.

12. Bidon de collecte (1) selon l'une des revendications 1 à 11, **caractérisé en ce qu'**il comporte un organe agitateur (300) comprenant une tige (310) logée à l'intérieur dudit réservoir (100) et portant fixement à son extrémité inférieure une tête d'agitation (320) apte à générer un brassage du liquide collecté.

13. Bidon de collecte (1) selon la revendication 12, **caractérisé en ce que** l'axe de ladite tige (310) est incliné selon un second angle d'inclinaison prédéterminé (α) vis-à-vis de la verticale.

14. Bidon de collecte (1) selon la revendication 13, **caractérisé en ce que** ledit second angle d'inclinaison prédéterminé (α) est compris entre 5 et 30°.

15. Bidon de collecte (1) selon l'une des revendications 12 à 14, **caractérisé en ce que** l'axe de ladite tige (310) est situé dans le plan longitudinal vertical médian dudit réservoir (100).

16. Bidon de collecte (1) selon l'une des revendications 12 à 15, **caractérisé en ce que** ledit organe agitateur (300) comprend également un moyeu (330) logé fixement à l'intérieur dudit réservoir (100) sous sa paroi supérieure (110) et recevant à libre rotation autour de son axe la portion supérieure de ladite tige (310), ainsi qu'un élément d'accouplement (350) porté fixement par l'extrémité supérieure de ladite tige (310) et saillant à l'extérieur dudit réservoir (100) au travers d'une découpe (112) ménagée dans sa paroi supérieure (110), cet élément d'accouplement (350) étant doté sur sa face supérieure d'un relief d'accouplement (352) prévu pour coopérer par correspondance de forme avec celui d'un autre élément d'accouplement porté par un arbre rotatif motorisé de sorte à assurer la mise en rotation de ladite tête d'agitation (320).

17. Bidon de collecte (1) selon la revendication 16, **caractérisé en ce que** la fixation dudit moyeu (330) audit réservoir (100) est assurée par l'intermédiaire d'une platine (340) surmontant ledit moyeu (330) auquel elle est fixée, cette platine (340) recouvrant en outre ladite découpe (112) et étant fixée audit réservoir (100).

18. Bidon de collecte (1) selon l'une des revendications 1 à 17, **caractérisé en ce que** la paroi supérieure (110) dudit réservoir (100) présente une conformation pyramidale formée par quatre pans inclinés (110A, 110B, 110C, 110D) s'étendant entre le bord périphérique de ladite ouverture (111) constituant le sommet de ce réservoir (100) et les bords supérieurs des dites parois avant (130), arrière (140) et latérales (150, 160).

19. Bidon de collecte (1) selon l'une des revendications 1 à 18, **caractérisé en ce que** ledit réservoir (100) présente des coins et des arêtes arrondis.

## Patentansprüche

1. Sammelkanister (1) für eine Vorrichtung zur Entnahme von In-situ-Proben aus einer flüssigen Ableitung, das einen insgesamt quaderförmigen, rechteckigen Behälter (100) aufweist, der von einer oberen Wand (110) mit einer Öffnung (111), die das Sammeln der entnommenen Ableitung ermöglicht, einer unteren Bodenwand (120), einer Vorderwand (130), einer Rückwand (140) und zwei Seitenwänden (150, 160) begrenzt wird, wobei der genannte Kanister (1) auch einen Ablasshahn (200) umfasst, der fluidisch mit einem im unteren Teil der genannten Vorderwand (130) des Behälters (100) vorgesehenen Loch (131) verbunden ist; **dadurch gekennzeichnet, dass** die genannte untere Bodenwand (120) einen Abschnitt (120A) aufweist, der longitudinal entlang einem Gefälle mit einem vorbestimmten Neigungswinkel (θ) geneigt ist, dadurch, dass die Seitenwände (150, 160) im unteren Teil Metalleinsätze (151, 161) aufweisen, und dadurch, dass der Kanister einen Haltesockel (400) aufweist, der am unteren Teil des genannten Behälters (100) befestigt ist und es zulässt, dass der genannte Kanister (100) vertikal stehen bleibt, wenn er auf eine horizontale Unterlage gestellt wird, wobei der genannte Haltesockel (400) eine sich horizontal unter der genannten unteren Bodenwand (120) des Behälters (100) erstreckende rechteckige Sohle (410) sowie zwei seitliche abfallende Ränder (420, 430) umfasst, die die genannte Sohle (410) begrenzen, indem sie sich vertikal über diese erstrecken, und die an den Metalleinsätzen (151, 161) der Seitenwände (150, 160) des Behälters (100) befestigt sind.

2. Sammelkanister (1) nach Anspruch 1, **dadurch gekennzeichnet, dass** sich der genannte longitudinal geneigte Abschnitt (120A) von der genannten Rückwand (140) des Behälters (100) über mindestens den größten Teil seiner Länge abfallend erstreckt.

3. Sammelkanister (1) nach Anspruch 2, **dadurch gekennzeichnet, dass** sich der genannte longitudinal geneigte Abschnitt (120A) über die gesamte Länge des genannten Behälters (100) zwischen seiner Rückwand (140) und seiner Vorderwand (130) erstreckt.

4. Sammelkanister (1) nach Anspruch 2, **dadurch gekennzeichnet, dass** sich der genannte longitudinal geneigte Abschnitt (120A) bis zu einem horizontalen vorderen Abschnitt (120B) erstreckt, der an die genannte Vorderwand (130) des Behälters (100) anschließt.

5. Sammelkanister (1) nach einem der Ansprüche 1 bis 4, **dadurch gekennzeichnet, dass** der genannte vorbestimmte Neigungswinkel (θ) zwischen 5 und 10° liegt.

6. Sammelkanister (1) nach einem der Ansprüche 1 bis 5, **dadurch gekennzeichnet, dass** das obere Ende dieses longitudinal geneigten Abschnitts (120A) im Wesentlichen auf derselben Höhe wie das untere Ende des genannten Anschlusslochs (131) des Hahns (200) liegt.

7. Sammelkanister (1) nach einem der Ansprüche 1 bis 6, **dadurch gekennzeichnet, dass** die genannte untere Bodenwand (120) im Querschnitt ein gekrümmtes Profil aufweist, dessen Konkavität dem Inneren des genannten Behälters (100) zugewandt ist.

8. Sammelkanister (1) nach einem der Ansprüche 1 bis 7, **dadurch gekennzeichnet, dass** der genannte Ablasshahn (200) vollständig in einer im unteren Teil der Vorderwand (130) des Behälters (100) ausgebildeten Vertiefung (132) untergebracht ist und sich bis zu dessen unterem Ende erstreckt.

9. Sammelkanister (1) nach einem der Ansprüche 1 bis 8, **dadurch gekennzeichnet, dass** der genannte Haltesockel (400) aus einem gestanzten und gebogenen Metallblech hergestellt ist.

10. Sammelkanister (1) nach einem der Ansprüche 1 bis 9, **dadurch gekennzeichnet, dass** der genannte Behälter (100) aus einem thermoplastischen Polymer geformt ist.

11. Sammelkanister (1) nach Anspruch 10, **dadurch gekennzeichnet, dass** der genannte Behälter (100) durch Rotationsformen erhalten wird.

12. Sammelkanister (1) nach einem der Ansprüche 1 bis 11, **dadurch gekennzeichnet, dass** er ein Rührorgan (300) aufweist, das eine Stange (310) umfasst, die im Inneren des genannten Behälters (100) untergebracht ist und an ihrem unteren Ende einen Rührkopf (320) fest trägt, der eine Durchmischung der gesammelten Flüssigkeit erzeugen kann.

13. Sammelkanister (1) nach Anspruch 12, **dadurch gekennzeichnet, dass** die Achse der genannten Stange (310) in einem zweiten vorbestimmten Neigungswinkel (α) gegenüber der Vertikalen geneigt ist.

14. Sammelkanister (1) nach Anspruch 13, **dadurch gekennzeichnet, dass** der genannte zweite vorbestimmte Neigungswinkel (α) zwischen 5 und 30° liegt.

15. Sammelkanister (1) nach einem der Ansprüche 12 bis 14, **dadurch gekennzeichnet, dass** die Achse der genannten Stange (310) in der vertikalen Längsmittelebene des genannten Behälters (100) liegt.

16. Sammelkanister (1) nach einem der Ansprüche 12 bis 15, **dadurch gekennzeichnet, dass** das genannte Rührorgan (300) auch eine Nabe (330), die fest im Inneren des genannten Behälters (100) unter seiner oberen Wand (110) untergebracht ist und den oberen Abschnitt der genannten Stange (310) um ihre Achse frei drehbar aufnimmt, sowie ein Kupplungselement (350) umfasst, das vom oberen Ende der genannten Stange (310) fest getragen wird und durch einen in seiner oberen Wand (110) ausgebildeten Ausschnitt (112) aus dem genannten Behälter (100) herausragt, wobei dieses Kupplungselement (350) auf seiner Oberseite mit einem Kupplungsrelief (352) versehen ist mit der Aufgabe, formschlüssig mit dem eines anderen Kupplungselements zusammenzuwirken, das von einer motorisierten Drehwelle getragen wird, um die Drehung des genannten Rührkopfs (320) zu gewährleisten.

17. Sammelkanister (1) nach Anspruch 16, **dadurch gekennzeichnet, dass** die Befestigung der genannten Nabe (330) an dem genannten Behälter (100) über eine Platte (340) gewährleistet ist, die auf der genannten Nabe (330) sitzt, an der sie befestigt ist, wobei diese Platte (340) außerdem den genannten Ausschnitt (112) abdeckt und an dem genannten Behälter (100) befestigt ist.

18. Sammelkanister (1) nach einem der Ansprüche 1 bis 17, **dadurch gekennzeichnet, dass** die obere Wand (110) des genannten Behälters (100) eine pyramidenförmige Gestaltung aufweist, die durch vier geneigte Flächen (110A, 110B, 110C, 110D) gebildet wird, die sich zwischen dem Umfangsrand der genannten die Spitze dieses Behälters (100) bildenden Öffnung (111) und den oberen Rändern der genannten Vorderwand (130), Rückwand (140) und Seitenwände (150, 160) erstrecken.

19. Sammelkanister (1) nach einem der Ansprüche 1 bis 18, **dadurch gekennzeichnet, dass** der genannte Behälter (100) abgerundete Ecken und Kanten aufweist.

## Claims

1. Collection container (1) for an in-situ sample collection device for a liquid effluent, including a reservoir having a parallelepipedal rectangle shape (100) overall delimited by an upper wall (110) having an opening (111) making it possible to collect the sampled effluent, a lower bottom wall (120), a front wall (130), a rear wall (140) and two lateral walls (150, 160), said container (1) also comprising a drain tap (200) fluidically connected to an orifice (131) arranged in the lower part of said front wall (130) of the reservoir (100); **characterized in that** said lower bottom wall (120) has a portion (120A) which is longitudinally inclined according to a gradient having a predetermined angle of inclination (θ), **in that** the lateral walls (150, 160) include in the lower part metal inserts (151, 161), and **in that** the container includes a support base (400) fixed to the lower part of said reservoir (100) and allowing said container (100) to remain vertical when it is placed on a horizontal support, said support base (400) comprising a rectangular bedplate (410) extending horizontally under said lower bottom wall (120) of the reservoir (100), as well as two lateral sloping edges (420, 430) which border said bedplate (410) by extending vertically above the latter and are fixed to the metal inserts (151, 161) of the lateral walls (150, 160) of the reservoir (100).

2. Collection container (1) according to claim 1, **characterized in that** said longitudinally inclined portion (120A) extends downwards from said rear wall (140) of the reservoir (100) over at least the majority of its length.

3. Collection container (1) according to claim 2, **characterized in that** said longitudinally inclined portion (120A) extends over the entire length of said reservoir (100) between its rear (140) and front (130) walls.

4. Collection container (1) according to claim 2, **characterized in that** said longitudinally inclined portion (120A) extends to a horizontal front portion (120B) meeting said front wall (130) of the reservoir (100).

5. Collection container (1) according to one of claims 1 to 4, **characterized in that** said predetermined angle of inclination (θ) is comprised between 5 and 10°.

6. Collection container (1) according to one of claims 1 to 5, **characterized in that** the upper end of this longitudinally inclined portion (120A) is arranged substantially at the same level in terms of height as the lower end of said connection orifice (131) of the tap (200).

7. Collection container (1) according to one of claims 1 to 6, **characterized in that** said lower bottom wall (120) has, in cross section, a curved profile the concavity of which is turned towards the inside of said reservoir (100).

8. Collection container (1) according to one of claims 1 to 7, **characterized in that** said drain tap (200) is housed entirely in a recess (132) arranged in the lower part of the front wall (130) of the reservoir (100) and extending to its lower end.

9. Collection container (1) according to one of claims 1 to 8, **characterized in that** said support base (400) is produced from a metal sheet that is cut and folded.

10. Collection container (1) according to one of claims 1 to 9, **characterized in that** said reservoir (100) is the result of moulding from a thermoplastic polymer.

11. Collection container (1) according to claim 10, **characterized in that** said reservoir (100) is obtained by rotational moulding.

12. Collection container (1) according to one of claims 1 to 11, **characterized in that** it includes a stirrer (300) comprising a rod (310) housed inside said reservoir (100) and bearing, fixed to its lower end, a stirring head (320) able to generate a mixing of the collected liquid.

13. Collection container (1) according to claim 12, **characterized in that** the axis of said rod (310) is inclined according to a second predetermined angle of inclination (α) with regard to vertical.

14. Collection container (1) according to claim 13, **characterized in that** said second predetermined angle of inclination (α) is comprised between 5 and 30°.

15. Collection container (1) according to one of claims 12 to 14, **characterized in that** the axis of said rod (310) is located in the median vertical longitudinal plane of said reservoir (100).

16. Collection container (1) according to one of claims 12 to 15, **characterized in that** said stirrer (300) also comprises a hub (330) housed fixedly inside said reservoir (100) under its upper wall (110) and receiving in free rotation about its axis the upper portion of said rod (310), as well as a coupling element (350) borne in a fixed manner by the upper end of said rod (310) and projecting to the outside of said reservoir (100) through a cutout (112) arranged in its upper wall (110), this coupling element (350) being equipped on its upper face with a coupling relief (352) provided to cooperate by correspondence of shape with that of another coupling element borne by a motorized rotating shaft to ensure said stirring head (320) is caused to rotate.

17. Collection container (1) according to claim 16, **characterized in that** the fixing of said hub (330) to said reservoir (100) is ensured by means of a plate (340) on top of said hub (330) to which it is fixed, this plate (340) also covering said cutout (112) and being fixed to said reservoir (100).

18. Collection container (1) according to one of claims 1 to 17, **characterized in that** the upper wall (110) of said reservoir (100) has a pyramid-shaped structure formed by four inclined faces (110A, 110B, 110C, 110D) extending between the peripheral edge of said opening (111) constituting the top of this reservoir (100) and the upper edges of said front (130), rear (140) and lateral (150, 160) walls.

19. Collection container (1) according to one of claims 1 to 18, **characterized in**
**that** said reservoir (100) has rounded corners and rims.
